# EUROPEAN PATENT SPECIFICATION

(11) **EP 0 658 769 B1**
(45) Date of publication and mention of the grant of the patent: **13.10.1999**
(21) Application number: 93919597.0
(22) Date of filing: 31.08.1993
(51) Int. Cl.: G01N 35/10, G01M 3/26

(54) **LEAKAGE DETECTION METHOD IN AUTOMATIC PIPETTING APPARATUS**
LECKPRÜFUNGSVERFAHREN IN EINER AUTOMATISCHEN PIPETTIERVORRICHTUNG
PROCEDE DE DETECTION DE FUITE DANS UN APPAREIL DE PIPETTAGE AUTOMATIQUE

(30) Priority: 02.09.1992 JP 23460392
(43) Date of publication of application: 21.06.1995
(73) Proprietor: ALOKA CO., LTD., Mitaka-shi Tokyo 181 (JP); ABBOTT LABORATORIES, Abbott Park, Illinois 60064-3500 (US)
(72) Inventor: TAKEDA, Masaaki, Mitaka-shi, Tokyo 181 (JP); KATO, Yuko, Mitaka-shi, Tokyo 181 (JP); KATAGI, Hitomi, Mitaka-shi, Tokyo 181 (JP)
(74) Representative: Grünecker, Kinkeldey, Stockmair & Schwanhäusser Anwaltssozietät
(86) International application number: JP9301228
(87) International publication number: WO9406020

(56) References cited:
- EP-A- 0 341 438
- EP-A- 0 571 100
- JP-A- 1 219 564
- JP-A- 56 164 957
- JP-A- 61 200 458
- JP-A- 62 024 151
- JP-A- 63 094 149
- JP-U- 62 020 372

## Description

The present invention relates to the field of detecting leakage in an automatic pipetting apparatus, and more particularly to a method comprising the features of the preamble portion of claim 1.

A pipetting apparatus for pipetting a sample is well known. The pipetting apparatus is used to pipet the blood serum or plasma obtained from blood of a human body into several receptacles, for instance.

The sample can be aspirated by a disposable nozzle tip, for instance. In order to pipette the sample by predetermined volume accurately, the volume of aspirated sample must be accurate. In the conventional pipetting apparatus, however, there is a case that leakage occurs at any of junction portions in the sample aspiration passage from the nozzle tip to a pump through a pressure sensor, in particular at the fitting portion between the disposable tip and the nozzle base, due to contamination or wear at the nozzle base. Therefore, there is a case that it is impossible to aspirate the sample accurately, so that the volume of the dispensed sample becomes not sufficient, thus raising a problem in that the pipetting accuracy is deteriorated.

In order to overcome this problem, in the conventional pipetting apparatus, the presence or absence of the leakage has been so far checked visually by the operator twice a day, for instance in the morning before use of the apparatus and in the evening after use thereof. In this case, the apparatus is stopped temporarily after the nozzle tip into which the sample has been aspirated is moved upward away from the liquid surface, and the operator checks by visual inspection whether the sample drops from the nozzle tip by the gravity thereof.

In this prior art method, however, since the operator must watch the nozzle tip for about 30 sec to 2 min continuously in front of the apparatus, there are problems in that this checking work is troublesome and in addition it is difficult to check the sample leakage quantitatively, because of its large dependence upon the operator's experience or of the lack of objectivity. In the case where the leakage is slight, in particular, it may be possible to maintain a pipetting accuracy without susceptible to the influence of leakage, by dispensing the sample into the receptacles immediately after the sample aspiration. Therefore, it has been difficult for the operator to judge the degree of allowable leakage.

A method as mentioned above is known from EP-A2-341 438.

The object of the present invention is to provide a method for detecting leakage in an automatic pipetting apparatus, which can decide that leakage or non-leakage occurs objectively and moreover allows to improve pipetting accuracy.

In order to achieve the above-mentioned object, there is provided a method comprising the features of claim 1.

According to the present invention described above, since there is provided the first sample leakage detecting step in which the first inner pump pressure detected by the pressure sensor is compared with the atmospheric pressure after the liquid sample has been aspirated, it is possible to detect such a large leakage that disables the sample aspiration.

Further, since there is provided the second sample leakage detecting step in which the first inner pump pressure is compared with the second inner pump pressure detected by the pressure sensor when a predetermined time has lapsed after the sample aspiration, it is possible to detect a slight leakage.

Furthermore, since there is provided the third liquid sample leakage detecting step in which the liquid sample aspirated by the nozzle tip is dispensed, the inner pump pressure is kept monitored by the pressure sensor with the lapse of time, and an abrupt change in the inner pump pressure is detected when the volume of the aspirated liquid sample decreases from a predetermined volume due to leakage, it is possible to detect an extremely slight leakage.

Further advantageous embodiments are indicated in the subclaims.

An example of the invention will be described hereinafter with reference to the appended drawings wherein
Fig. 1 is a perspective view showing the pipetting apparatus to which the method for detecting leakage according to the present invention is applied;
Fig. 2 is a cross-sectional view showing the essential portion of the nozzle portion 32;
Fig. 3 is a schematic block diagram showing the pipetting apparatus shown in Fig. 1;
Fig. 4 is an illustration for assistance in explaining the leakage detecting process for the pipetting apparatus shown in Fig. 1;
Fig. 5 is a graphical representation showing the relationship between the lapse of time after aspiration and the inner pressure of the pump obtained when the aspiration is disabled;
Fig. 6 is a graphical representation showing the relationship between the lapse of time after aspiration and the inner pressure of the pump obtained when the leakage is slight; and
Fig. 7 is a graphical representation showing the relationship between the lapse of time after aspiration and the inner pressure of the pump obtained when the leakage is extremely slight.

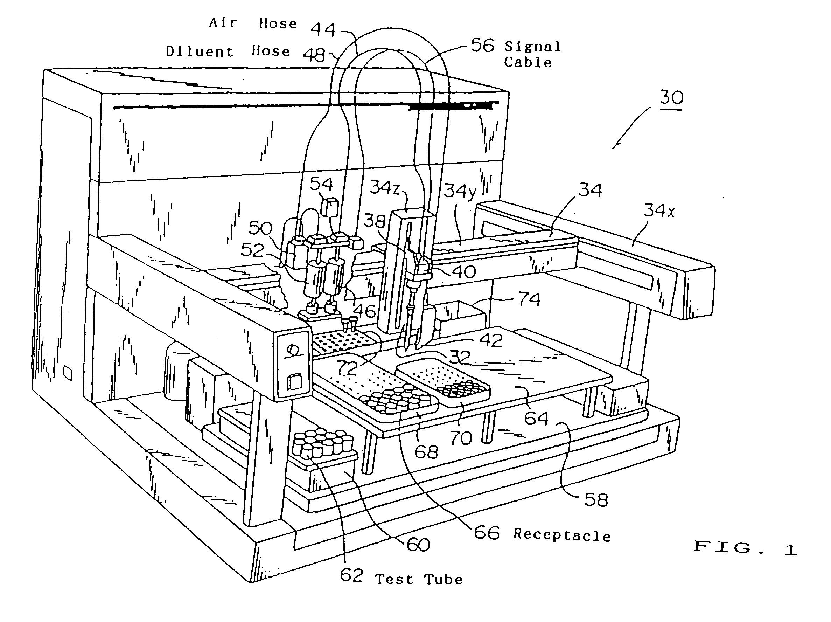

Fig. 1 is a perspective view showing the external appearance of an automatic pipetting apparatus 30 to which the leakage detecting method according to the present invention is applied.

In this embodiment, the pipetting apparatus 30 is used to pipette a sample for analysis of constituents of the sample.

A nozzle portion 32 for aspirating a sample (shown at roughly the center of the drawing) is supported by an XYZ robot 34 so as to be movable freely in the three dimensional space.

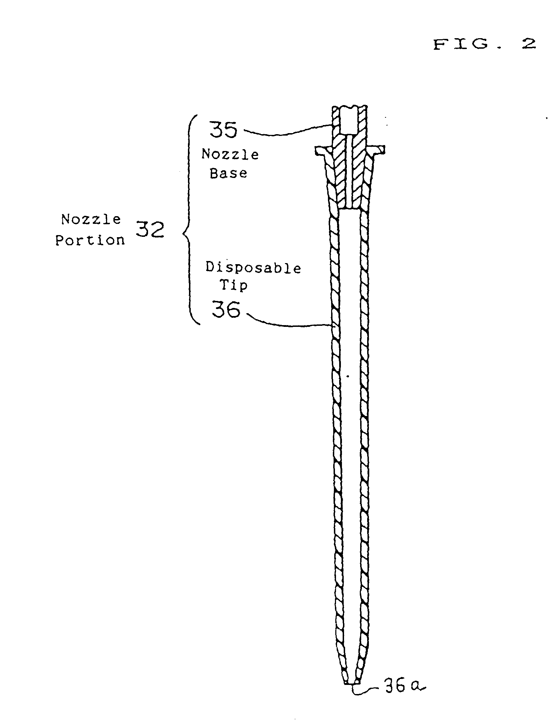

Fig. 2 is a cross sectional view showing an essential portion of the nozzle portion 32, which is composed of a nozzle base 35 and a disposable tip 36 as a nozzle tip (hereinafter, referred to as a tip). In other words, in this pipetting apparatus of this embodiment, a disposable nozzle tip is used as the nozzle. The tip 36 is securely fixed to the nozzle base 35 by inserting and fitting an end portion of the nozzle base 35 into the upper opening of the tip 36. The tip 36 is formed with a small diameter opening 36a through which the sample is aspirated or dispensed. The tip 36 is made of a hard plastic, for instance, and the nozzle base 35 is made of a metal, for instance.

In Fig. 1, the XYZ robot 34 is composed of an X drive section 34x, a Y drive section 34y, and a Z drive section 34z. An elevator section 38 provided with the nozzle portion 32 is coupled to the Z drive section 34z so as to be movable up and down. The elevator section 38 includes a limit switch 40 having such a function as a jamming sensor. The limit switch 40 can detect an external force applied to the nozzle portion 32 upwardly over a predetermined value.

A diluent nozzle 42 for dispensing a diluent is fixed to the Z drive section 34z. One end of an air hose 44 is connected to the nozzle portion 32. The other end of the air hose 44 is connected to a cylinder 46 which is operative as an aspirating and dispensing pump. Further, one end of a diluent hose 48 is connected to the diluent nozzle 42. The other end of the diluent hose 48 is connected to another cylinder 52 via an electromagnetic valve 50.

A pressure sensor 54 is connected between the cylinder 46 and the nozzle portion 32 to measure the inner pressure of the air hose 44. Further, a signal from the limit switch 40 is transmitted to a mainframe of the apparatus through a signal cable 56.

In a test tube rack 60 mounted on a pipetting base 58, a plurality of test tubes 62 each containing a sample therein are supported vertically. Further, a tray 68 and a microplate 70 are mounted on a horizontal base 64 provided on the pipetting base 58. Here, a plurality of receptacles 66 into which the pipetted sample is to be contained, respectively, are arranged on the tray 68, and a plurality of wells to which the pipetted sample is to be contained, respectively are provided in the microplate 70. Further, it is of course possible to arrange test tubes 62 instead of the tray 68 or the microplate 70.

In the pipetting apparatus according to this embodiment, since the nozzle tip is of disposable type; that is, of throwaway type, a plurality of new tips 36 are prepared in a tip stand 72 so as to be replaced with a new one, in sequence. Further, a tip disuse tray 74 to which used disposable tips are put is also provided.

Accordingly, in the pipetting apparatus as described above, it is possible to aspirate a sample by the tip 36 of the nozzle portion 32 and then transfer the aspirated sample to another receptacle.

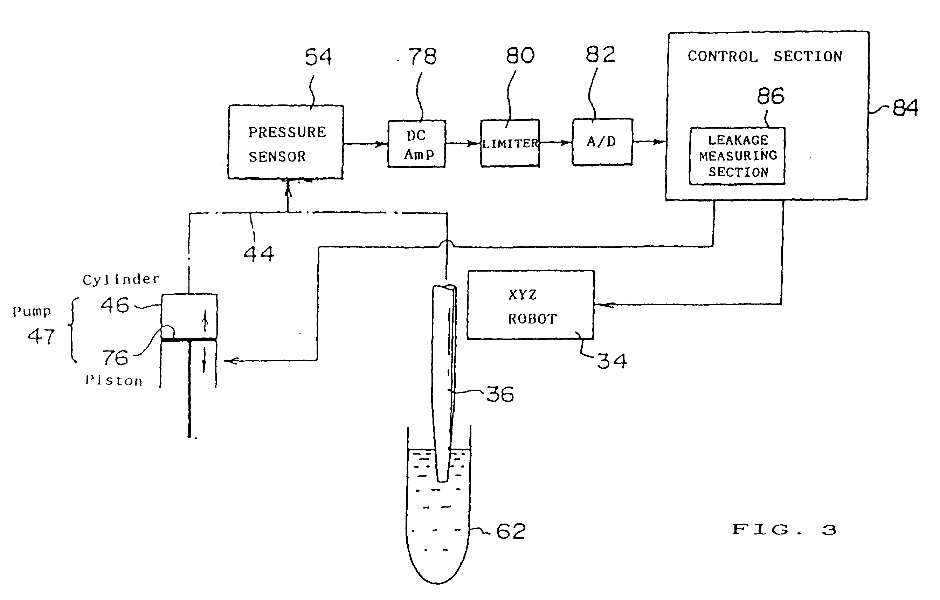

Fig. 3 is a schematic block diagram showing the pipetting apparatus according to the present embodiment. A pump 47 is composed of a piston 76 and a cylinder 46. When the piston 76 is moved up and down, the inner volume of the cylinder 46 changes and therefore aspirating pressure or dispensing pressure is generated in the cylinder 46. Thus generated pressure is transmitted to the tip 36 of the nozzle portion 32 through the air hose 44 to aspirate or dispense the sample. The inner pressure of the air hose 44 is detected by the pressure sensor 54. The sensor signal is amplified by a DC amplifier 78, and then transmitted to an A/D converter 82 via a limiter circuit 80. The limiter circuit 80 is a protective circuit for suppressing an excessively high input sensor signal. The A/C converter 82 converts an analog sensor signal into a digital signal. The digital signal is transmitted to a control section 84.

The control section 84 is constituted from a microcomputer or the like, for instance, which controls the inner volume of the cylinder 46 and the XYZ robot 34. In addition, the control section 84 of the present embodiment comprises a leakage measuring section 86.

The method for detecting leakage in the pipetting apparatus as described above will be explained hereinbelow in more practical way.

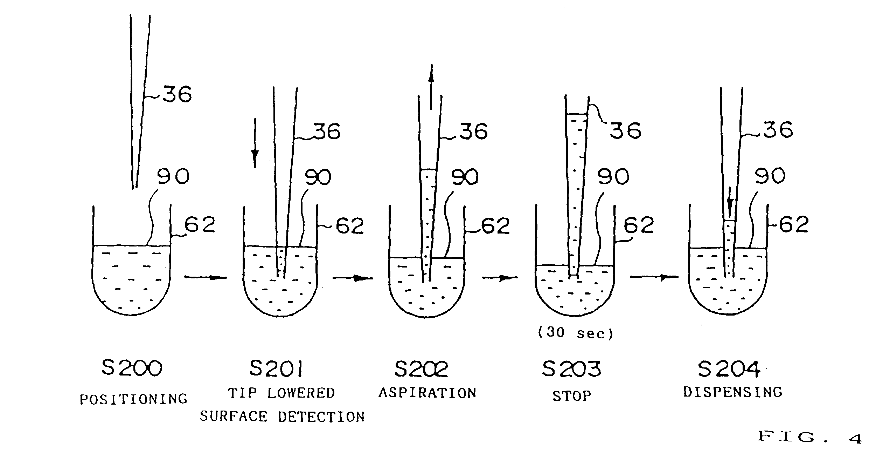

Fig. 4 shows leakage detecting process used in the pipetting apparatus shown in Fig. 1.

In step 200, with reference to Fig.4, the tip 36 is positioned by the XYZ robot 34 over the test tube 62 in which a distilled water 90 for detecting leakage is contained.

In step 201, the tip 36 is lowered to detect the liquid surface. This liquid surface detection can be carried out by monitoring the inner pressure of the air hose 44 by the pressure sensor 54. When the inner pressure of the air hose 44 changes abruptly, the control section 84 detects that the end of the tip 36 reaches the liquid surface.

In step 202, the distilled water 90 is aspirated. That is, the piston 76 is pulled to increase the inner volume of the cylinder 46. In this case, since the inner pressure of the pump 47 is reduced, the distilled water 90 is aspirated into the tip 36. In this case, a volume from 200 µl to 500 µl of the distilled water 90 is aspirated. In this step, the tip 36 is lowered sufficiently into the distilled water 90 for aspiration of the distilled water, in such a way that the end of the tip 36 will not come out over the liquid surface. The inner pressure P1 of the pump 47 is measured by the pressure sensor 54 after the aspiration, for example when 500 msec has elapsed after the distilled water aspiration. In this case, if the inner pressure P1 is roughly equal to the atmospheric pressure, a determination that there is a leakage is made at this time point.

In step 203, after the inner pressure P1 of the pump 47 has been measured at the end of the aspiration of the distilled water in step 202, the tip 36 is kept stopped for 30 sec, for instance without raising the tip 36, to measure the inner pressure P2 of the pump 47 again by the pressure sensor 54. In this case, if the inner pressure P2 is equal to the previously measured inner pressure P1, a determination that there is no leakage is made at this time point.

In step 204, the aspirated distilled water 90 is dispensed into the same test tube 62. At this time, the inner pressure of the pump 47 is kept monitored by the pressure sensor 54. In this case, if the inner pressure does not change markedly, a determination that there is no leakage is made at this time point. The leakage detecting method in the above steps 202, 203 and 204 will be described hereinbelow in more detail.

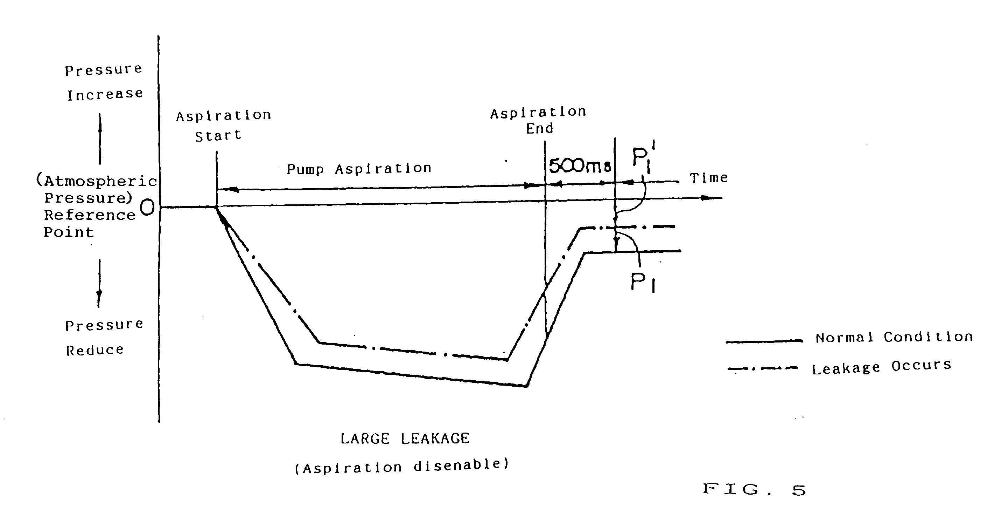

Figs. 5 to 7 show the relationship between the inner pressure of the pump and the lapse of the aspiration time, with respect to a large leakage in which the liquid sample cannot be aspirated, a slight leakage, and an extremely slight leakage, respectively. Further, the solid lines represent the inner pressure of the pump 47 obtained in the normal aspiration without any leakage; and the dashed lines represent the inner pressure of the pump 47 obtained in the abnormal aspiration under leakage, respectively.

To start detecting the leakage, the operator sets a test tube 62 in which distilled water 90 of about 1 to 3 ml is put, and then turns on a switch to start the leakage detection. Then, the pipetting apparatus 30 starts the leakage detection operation automatically.

With reference to Fig. 5, the method of detecting such a large leakage that the aspiration is disabled in step 202 will be described. Here, the large leakage that the aspiration is disabled means that the tip 36 hardly aspirates the distilled water 90 and only air is sucked. For instance, even if 500 µl is required to be aspirated, only 200 µl or less can be aspirated. In this abnormal case, when the distilled water 90 is being aspirated by the tip 36, the inner pressure of the pump 47 more approaches the atmospheric pressure throughout the operation from the aspiration start to the aspiration end, in comparison with the inner pressure in the normal case.

Accordingly, it is possible to detect the leakage, by measuring the inner pressure of the pump 47 by the pressure sensor 54 when 500 msec has elapsed after the aspiration end, and further comparing the measured pressure with the atmospheric pressure. In practice, the measuring section 86 of the control section 84 compares a voltage indicative of the inner pressure P1 obtained when 500 msec has elapsed after the aspiration end with a voltage indicative of the atmospheric pressure. When the voltage difference between the two is less than 170 mV, the measuring section 86 decides automatically that a leakage occurs. In other words, since the inner pressure P1' as shown in Fig.5 is near the atmospheric pressure, a determination that leakage occurs is made and the further measurement is ended at this time point.

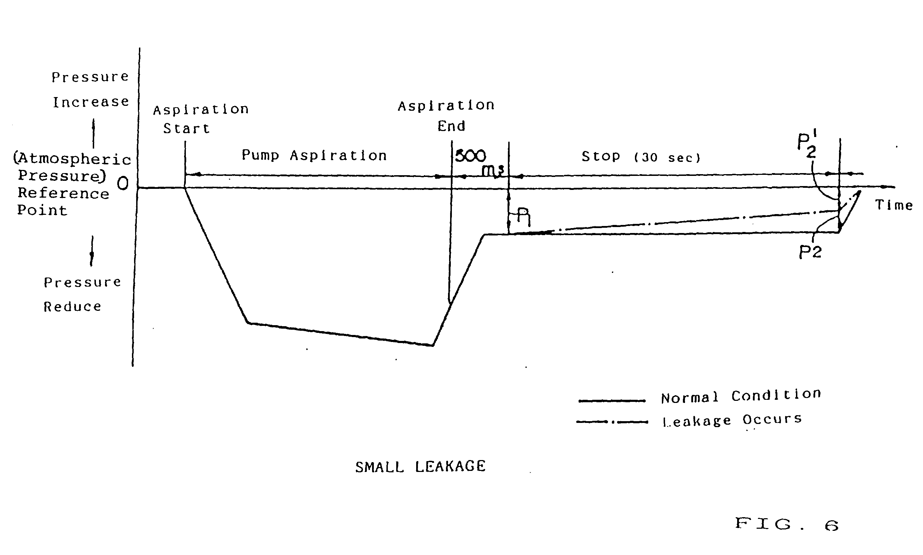

With reference to Fig.6, the method for detecting a slight leakage in step 203 will be described. Here, the slight leakage means a leakage of 8 µl or more for 1 sec, for instance. Namely, this means a case where the liquid column of the tip 36 is being lowered rapidly when the aspiration is kept stopped after a volume of 500 µl has been aspirated. Therefore, as shown in Fig. 6, if the inner pressure P1 of the pump 47 is normal in comparison with the atmospheric pressure after aspiration, for instance when 500 msec has elapsed, the pump 47 is kept stopped for 30 sec, for instance without raising the tip 36. Then, the inner pressure P2 of the pump 47 is measured by the pressure sensor 54 to compare the inner pressure P1 with P2 for leakage detection. In practice, when the measuring section 86 of the control section 84 detects that a difference between the voltage indicative of the inner pressure P1 and that indicative of the inner pressure P2 is equal to or greater than 100 mV, a determination that leakage occurs is made automatically. In other words, when the inner pressure P2' is near the atmospheric pressure, as shown in Fig. 6. in comparison with the inner pressure P1, the occurrence of the leakage is decided, and the measurement is ended at this time point.

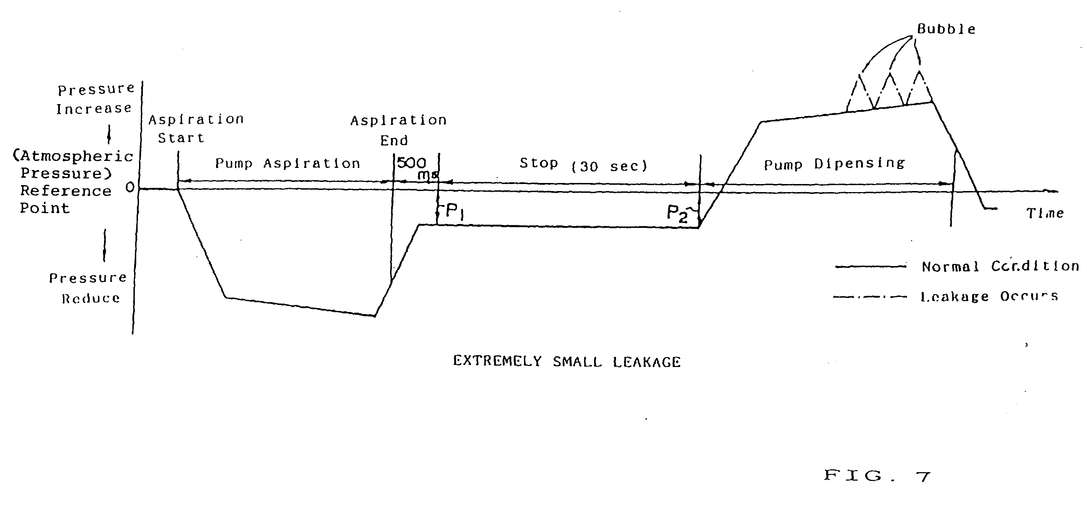

With reference to Fig. 7, the method for detecting an extremely slight leakage in step 204 will be described. Here, the extremely slight leakage means a leakage from 1 µl to less than 8 µl for 1 sec, for instance. As shown in Fig. 7, if the inner pressure P2 of the pump 47 obtained when the pump 47 is kept stopped for 30 sec after aspiration is roughly equal to the inner pressure P1 of the pump 47 obtained when 500 msec has elapsed after aspiration, distilled water (whose volume is about 90 % of the aspirated volume, for instance) is dispensed from the tip 36 to the same test tube 62 (from which the distilled water is aspirated). During this distilled water dispensation, the inner pressure of the pump 47 is monitored by the pressure sensor 54 to detect the leakage on the basis of a change in the inner pressure. The changes in pressure as shown by a plurality of peaks (the dashed lines) in Fig. 6 are produced, whenever the distilled water decreases due to leakage and air incoming into the tip 36 instead is discharged as bubbles. In practice, the leakage measuring section 86 of the control section 84 checks at all times the voltage indicative of the inner pressure during the distilled water is being dispensed, beginning from when 500 msec has elapsed after distilled water dispensation. In this case, when the pressure change exceeds 60 mV for each 100 msec, the occurrence of leakage is decided automatically. In other words, when a plurality of peaks as shown by the dashed lines in Fig. 7 appear, the occurrence of the leakage is determined, and the measurement is ended at this time point.

Thereafter, the automatic pipetting apparatus 30 raises the tip 36, and displays the inspection results on a screen or prints them on a paper for the operator.

Further, the detection sensitivity of the leakage can be increased by determining the time where the tip 36 is kept stopped to be more than 30 sec. On the other hand, the leakage detection time can be reduced by determining this stop time to be less than 30 sec.

Furthermore, the above-mentioned leakage detection can be made for each pipetting work. However, in order to improve the working efficiency, it is preferable to detect the leakage once a day, for instance before or after the pipetting work. In this case, it is possible to confirm that the pipetting accuracy can be maintained.

In the above-mentioned embodiment, although the inner pressure of the pump is measured by the pressure sensor, and the detected inner pressure is transduced into electric signals to detect the pressure fluctuations; that is, to detect the leakage of the pipetting apparatus. Without being limited thereto, however, various leakage detecting methods can be adopted, for instance such that the liquid surface level of the distilled water aspirated by the tip 36 can be detected optically, or the weights of the directly aspirated distilled water and the tip 36 can be measured, etc.

As described above, the first liquid sample leakage detecting step is provided, in which the first inner pump pressure detected by the pressure sensor is compared with atmospheric pressure after the liquid sample has been aspirated. As a result, it is possible to detect such a large leakage that the sample cannot be aspirated.

Further, the second liquid sample leakage detecting step is provided, in which the first inner pump pressure is compared with the second inner pump pressure detected by the pressure sensor a predetermined time after the liquid sample has been aspirated. As a result, it is possible to detect a slight leakage.

In addition, the third liquid sample leakage detecting step is provided, in which the liquid sample aspirated by the nozzle tip is dispensed, the inner pump pressure is monitored by the pressure sensor with the lapse of time and an abrupt change in the inner pump pressure caused when the volume of the aspirated liquid sample decreases from a predetermined aspirated volume due to leakage is detected. As a result, it is possible to detect an extremely slight leakage.

Accordingly, it is possible to prevent the operator from being kept stood in front of the pipetting apparatus to monitor the presence or absence of leakage or the degree of the leakage, thus reducing the pipetting work load to the operator.

Further, it is possible to easily discriminate such a slight leakage in which no leakage occurs within the time between the aspiration and the dispensation (which is a slight leakage as acceptable in the apparatus) from such a serious leakage by which the pipetting accuracy is deteriorated, on the basis of the set conditions of the apparatus.

Further, the method for detecting the leakage can be easily applied to any pipetting apparatuses provided with a pressure sensor for detecting the liquid surface, and therefore it can be said that this apparatus is economical.

### Explanation of Reference Numerals:

- 30: Pipetting apparatus
- 32: Nozzle portion
- 34: XYZ robot
- 35: Nozzle base
- 36: Disposable tip
- 54: Pressure sensor
- 62: Test tube
- 84: Control section
- 86: Leakage measuring section
- 90: Distilled water

## Claims

1. A method for detecting leakage in an automatic pipetting apparatus (30) including a nozzle tip (36) for aspirating and dispensing a liquid sample, an aspirating and dispensing pump (47) having a cylinder connected to the nozzle tip and a piston, and a pressure sensor for detecting inner pressure of the pump, wherein an inner pump pressure is monitored by a pressure sensor, **characterized by**
a first liquid sample leakage detecting step of comparing a first inner pump pressure (P1) detected by the pressure sensor with atmospheric pressure after sample aspiration;
a second liquid sample leakage detecting step of comparing the first inner pump pressure (P1) with a second inner pump pressure (P2) detected by the pressure sensor at a predetermined time after detection of said first inner pump pressure; and
a third liquid sample leakage detecting step of dispensing the liquid sample aspirated by the nozzle tip, monitoring further the inner pump pressure by the pressure sensor with the lapse of time, and detecting an abrupt change in the inner pump pressure to determine leakage caused when volume of the aspirated liquid sample decreases from a predetermined aspirated volume due to leakage.

2. Method according to claim 1, wherein a determination that there is a leakage is made in said first step when the inner pump pressure (P1) is roughly equal to atmospheric pressure.

3. Method according to claim 1 or 2, wherein a determination that there is no leakage is made in the second step when the second inner pump pressure (P2) is roughly equal to the first inner pump pressure (P1).

4. Method according to claim 2, wherein pressure measurement is ended when leakage is determined in said first step.

5. Method according to claim 3 or 4, wherein pressure measurement is ended when leakage is determined in said second step.

## Patentansprüche

1. Leckprüfungsverfahren in einer automatischen Pipettiervorrichtung (30) mit einem Düsenaufsatz (36) zum Ansaugen und Ausgeben einer Flüssigkeitsprobe, einer Ansaug- und Ausgabepumpe (47) mit einem mit dem Düsenaufsatz verbundenen Zylinder und einem Kolben, sowie einem Druckgeber zum Prüfen des Innendrucks der Pumpe, wobei der Pumpeninnendruck von einem Druckgeber gemessen wird, **gekennzeichnet durch**
einen ersten Leckprüfungsschritt für eine Flüssigkeitsprobe, bei dem ein erster vom Druckgeber erfaßter Pumpeninnendruck (P1) nach dem Ansaugen der Probe mit dem Luftdruck verglichen wird,
einen zweiten Leckprüfungsschritt für eine Flüssigkeitsprobe, bei dem der erste Pumpeninnendruck (P1) mit einem zweiten vom Druckgeber erfaßten zweiten Pumpeninnendruck (P2) verglichen wird, der nach einer vorgegebenen Zeitspanne ab Erfassen des ersten Pumpeninnendrucks festgestellt wird, und
einen dritten Leckprüfungsschritt für eine Flüssigkeitsprobe, bei dem die durch den Düsenaufsatz angesaugte Flüssigkeitsprobe ausgegeben wird, der Pumpeninnendruck weiterhin vom Druckgeber überwacht wird und eine abrupte Änderung des Pumpeninnendrucks erkannt wird, um ein Leck festzustellen, welches hervorgerufen wird, wenn die Menge der angesaugten Flüssigkeitsprobe infolge eines Lecks kleiner als eine vorgegebene Ansaugmenge wird.

2. Verfahren nach Anspruch 1, wobei im ersten Schritt die Feststellung getroffen wird, daß ein Leck vorhanden ist, wenn der Pumpeninnendruck (P1) in etwa genauso groß wie der Luftdruck ist.

3. Verfahren nach Anspruch 1 oder 2, wobei im zweiten Schritt die Feststellung getroffen wird, daß kein Leck vorhanden ist, wenn der zweite Pumpeninnendruck (P2) annähernd genauso groß wie der erste Pumpeninnendruck (P1) ist.

4. Verfahren nach Anspruch 2, wobei die Druckmessung beendet wird, wenn im ersten Schritt ein Leck festgestellt wird.

5. Verfahren nach Anspruch 2, wobei die Druckmessung beendet wird, wenn im zweiten Schritt ein Leck festgestellt wird.

## Revendications

1. Procédé pour détecter une fuite dans un appareil de pipetage automatique (30) comportant une pointe de buse (36) pour aspirer et distribuer un échantillon de liquide, une pompe d'aspiration et de distribution (47) ayant un cylindre relié à la pointe de buse et à un piston, et un capteur de pression pour détecter la pression intérieure de la pompe, dans lequel une pression de pompe intérieure est contrôlée par un capteur de pression, caractérisé par
une première étape de détection de fuite d'échantillon liquide consistant à comparer une première pression de pompe intérieure (P1) détectée par le capteur de pression avec la pression atmosphérique après aspiration d'un échantillon ;
une seconde étape de détection de fuite d'échantillon liquide consistant à comparer la première pression de pompe intérieure (P1) avec une seconde pression de pompe intérieure (P2) détectée par le capteur de pression à un instant prédéterminé après la détection de ladite première pression de pompe intérieure ; et
une troisième étape de détection de fuite d'échantillon liquide consistant à distribuer l'échantillon liquide aspiré par la pointe de buse, à contrôler en outre la pression de pompe intérieure au moyen du capteur de pression en fonction du temps, et à détecter une brusque variation de la pression intérieure de pompe pour déterminer une fuite provoquée lorsque le volume de l'échantillon liquide aspiré décroît par rapport à un volume aspiré prédéterminé au fait d'une fuite.

2. Procédé selon la revendication 1, dans lequel une détermination selon laquelle il se produit une fuite est effectuée lors de ladite première étape lorsque la pression intérieure de pompe (P1) est grossièrement égale à la pression atmosphérique.

3. Procédé selon la revendication 1 ou 2, dans lequel une détermination selon laquelle il ne se produit aucune fuite est effectuée lors de la seconde étape lorsque la seconde pression intérieure de pompe (P2) est grossièrement égale à la première pression intérieure de pompe (P1).

4. Procédé selon la revendication 2, dans lequel la mesure de pression est interrompue lorsque la fuite est déterminée lors de ladite première étape.

5. Procédé selon la revendication 3 ou 4, dans lequel la mesure de pression est interrompue lorsque la fuite est déterminée lors de ladite seconde étape.
